# EUROPEAN PATENT APPLICATION

(11) **EP 4 787 886 A2**
(43) Date of publication of application: **05.08.2026**
(21) Application number: 26186578.6
(22) Date of filing: 26.05.2023
(51) Int. Cl.: H04Q 9/00

(54) **IMPROVED BATTERY MANAGEMENT SYSTEM AND MONITORING DEVICES**

(30) Priority: 29.05.2022 EP 22175970
(62) Divisional of application: 23729116.6
(71) Applicant: Dukosi Limited, Edinburgh EH3 8RA (GB)
(72) Inventor: MCVEIGH, Gavin, Edinburgh, EH3 8RA (GB); JACKSON, Angus, Edinburgh, EH3 8RA (GB); CONVREY, Anders, Edinburgh, EH3 8RA (GB); QUINN, Simon, Edinburgh, EH3 8RA (GB); BALLANY, Ross, Edinburgh, EH3 8RA (GB); PEARCE, Simon, Edinburgh, EH3 8RA (GB); SYLVESTER, Joel, Edinburgh, EH3 8RA (GB); JONES, Adrian, Edinburgh, EH3 8RA (GB); DARROCH, Jim, Edinburgh, EH3 8RA (GB); HOPE, Ian, Edinburgh, EH3 8RA (GB)
(74) Representative: Finnegan Europe LLP

(57) **Abstract**

The present disclosure provides a monitoring device operable to report sensor measurement data in a battery system. The monitoring device comprising: at least one sensor operable to obtain measurement data of one or more modules of the battery system; a receiver operable to receive, from a communications controller, a timing signal defining a transmission time of a reporting frame; and a transmitter operable to report the obtained measurement data to the communications controller; wherein the monitoring device is configured to: use the received timing signal to select a sampling time for the at least one sensor to obtain the measurement data of the one or more modules of the battery system; and transmit the obtained measurement data to the communications controller at the transmission time defined in the received timing signal.

## Description

### Technical Field

The present disclosure relates to the field of battery technology and energy cells. More specifically the present disclosure relates to battery management systems and monitoring devices for monitoring battery cells or groups of battery cells and communications controllers for use with such monitoring devices.

### Background

Battery systems, comprising a plurality of battery cells, are used in a wide range of modern electric power applications. For example, they are used to power electric vehicles, they are used in industrial power applications, in transportation, and in commercial applications such as powering of modern electronic devices. Given the relatively high-power demands of such applications, a battery system often comprises multiple battery cells coupled together to achieve the required power output. The battery cells may be coupled together to form a battery pack, and the battery system may comprise one or more battery packs.

It is common to connect a battery system to a battery management system, configured to ensure that the battery system operates within its safe operating range. The safe operating area is commonly defined as the voltage, temperature and current conditions under which the battery system is expected to operate without self-damage.

To achieve this typically each battery cell in a battery system is monitored using a cell monitoring device. The function of the cell monitoring device is to measure signals from the battery cells being monitored such as cell terminal voltage, the cell current, the cell temperature, cell pressure etc. which are then used to determine if the cell is in a safe state. In some systems, measurements made by a cell monitoring device are collated and transmitted to a battery management system which processes the measurements to determine the current state of a cell being monitored. Alternatively, measurements may be collated and processed within the individual cell monitoring devices and reported to a battery management system so that the battery management system can maintain an overview of the current state of the battery system.

### SUMMARY

One aspect of the present disclosure provides a battery management system, comprising: a battery management unit, one or more monitoring devices; and a communications controller operable to receive and process measurements of one or more battery cells of a battery system received from the one or more monitoring devices and provide processed measurements to the battery management unit. The one or more monitoring devices may each comprise: one or more sensors operable to obtain measurements of one or more battery cells of a battery system; a transmitter operable to transmit obtained measurements to the communications controller; and a processor operable to process obtained measurements from the one or more battery cells and cause the obtained measurements to be reported to the communications controller in accordance with a predetermined schedule.

In some embodiments, the communications controller and the processors of the one or more monitoring devices are configured to cause obtained measurements from the one or more battery cells to be reported to the battery management unit in a deterministic manner which is independent of triggering by the processors or the communications controller of any interrupts, external memory access steps or the use of a stack. By restricting the processing of the processors of the communications controller and monitoring devices in such a manner, in such embodiments the reliability of the battery management system may be improved as random errors arising from non-deterministic processing can be avoided.

Another aspect of the present disclosure provides a battery management system in which one or more monitoring devices are provided wherein each of the monitoring devices comprise one or more sensors operable to obtain measurements of one or more modules of a battery system; a receiver operable to receive, from a communications controller, a timing signal indicative of the timing of a reporting frame; and a transmitter operable to report obtained measurements to the communications controller; wherein each of the monitoring devices is configured to: transmit previously obtained measurements to the communications controller at one or more transmission times relative to the timing indicated by a timing signal received from a communications controller; and utilize the received timing signal to select sampling times for the measurements obtained by the one or more sensors to be reported to the communications controller in a later reporting cycle. In such systems the co-ordination of the acquisition of sensor measurements may be enhanced as the sampling times of the monitoring devices are co-ordinated by the receipt of the timing signal from the communications controller.

In accordance with another aspect of the disclosure, there is provided a monitoring device operable to report sensor measurement data in a battery system. The monitoring device comprises at least one sensor operable to obtain measurement data of one or more modules of the battery system; a receiver operable to receive, from a communications controller, a timing signal defining a transmission time for the measurement data; and a transmitter operable to report the obtained measurement data to the communications controller. The monitoring device is further configured to use the received timing signal to select a sampling time for the at least one sensor to obtain the measurement data of the one or more modules of the battery system; and transmit the obtained measurement data to the communications controller at the transmission time defined in the received timing signal. In this way, both the sensor sampling time and the transmission time for reporting the sensor measurement are defined by the timing signal.

In accordance with some embodiments, the timing signal defines the sampling time, and the at least one sensor is operable to take a measurement and generate the measurement data at the sampling time defined in the received timing signal. The timing signal may define a shared sampling time for a plurality of different monitoring devices, and the at least one sensor may be operable to take a measurement and generate measurement data at the sampling time defined for the plurality of different monitoring devices in sync with the plurality of different monitoring devices.

In accordance with yet a further aspect of the disclosure there is provided a communications controller operable to receive sensor measurement data from one or more monitoring devices in a battery system. The communications controller may comprise: at least one processor operable to generate a timing signal; a transmitter operable to transmit the timing signal to the one or more monitoring devices, the timing signal defining a transmission time for transmitting sensor measurement data from at least one of the one or more monitoring devices to the communications controller; and a receiver operable to receive the sensor measurement data from the one or more monitoring devices. The communications controller is further configured to: select a sampling time for at least one of the one or more monitoring devices, the sampling time defining a time at which a sensor of the at least one monitoring device obtains sensor measurement data from one or more modules of the battery system; and incorporate the sampling time in the timing signal, prior to transmitting the timing signal to the one or more monitoring devices. Advantageously, such a controller is able to provide a flexible, yet robust, sensor measurement data-reporting scheme. This is achieved by specifying both a sampling time at which a sensor is to obtain a measurement of the battery system, and a transmission time when the obtained measurement data is to be transmitted to the communications controller, in a timing signal generated by the communications controller. Since both the sampling time and the transmission time are specified in the timing signal by the communications controller, the retrospective incorporation of additional monitoring devices in the battery system may be accommodated by amending the timing signal, and more specifically by amending one or more transmission times and/or sampling times associated with the newly added monitoring device.

In accordance with some embodiments, the communications controller may be configured to select a single sampling time for a plurality of monitoring devices, enabling each one of the plurality of monitoring devices to obtain sensor measurement data at the same sampling time. In this way, the sampling of measurement data by the plurality of monitoring devices is synchronised.

The herein disclosed monitoring devices and communications controllers improve the functional safety of a battery system and are particularly beneficial for use in battery systems requiring deterministic battery cell data-reporting processes.

Further aspects of the present disclosure provide monitoring devices and controllers for use in systems such as those described above.

### BRIEF DESCRIPTION OF THE DRAWINGS

The foregoing will be described in more detail with the following more particular description of example embodiments, as illustrated in the accompanying drawings in which reference characters refer to the same parts throughout the different views. The drawings are not necessarily to scale, emphasis instead being placed upon illustrating the example embodiments.
**FIG. 1** is a schematic illustration of an exemplary wired battery management system architecture in which a plurality of cell monitoring devices are connected to a communications controller via a wired harness in the form of a star network.
**FIG. 2** is a schematic illustration of an exemplary wired battery management system architecture in which a plurality of cell monitoring devices are connected to a communications controller via a wired harness in the form of a daisy chained network.
**FIG. 3** is a schematic illustration of an exemplary battery management system architecture in which a plurality of cell monitoring devices and a communications controller are connected via a wireless communications network.
**FIG. 4** is a schematic block diagram of an exemplary cell monitoring device and a communications controller of the battery management system of Figure 3.
**FIG. 5** is a schematic block diagram of an alternative exemplary cell monitoring device and communications controller of the battery management system of Figure 3.
**FIGS. 6-9** are a set of schematic data process flow charts illustrating the timing and scheduling of data transmissions within a battery management system.
**FIG. 10a** is a schematic diagram illustrating the information content of a timing signal, in accordance with some embodiments.
**FIG. 10b** is a schematic data process flow chart illustrating how the timing signal of FIG. 10a is used to synchronise sensor measurements and define transmissions between the communications controller and the at least one cell monitoring device, in accordance with some embodiments.
**FIG. 11** is a schematic illustration to explain how the data transmissions from a communications controller can be used to synchronise the acquisition of sensor data within a battery management system, in accordance with some embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims. It should be noted that the words 'modules' and 'cells' may be used interchangeably in this document, and therefore may relate to the same components.

### Overview of battery management system architectures

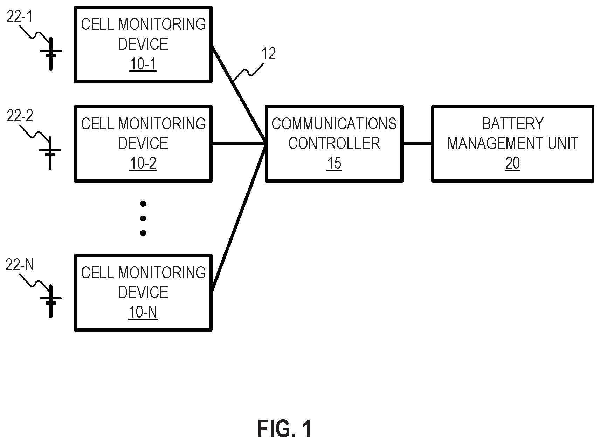

Figure 1 is an illustration of an exemplary wired battery management system architecture in which a plurality of cell monitoring devices 10-1...10-N are connected via wired harness 12 to communications controller 15. In the exemplary architecture of Figure 1, wired harness 12 connects cell monitoring devices 10-1...10-N to communications controller 15 in the form of a star network with communications controller 15 at its centre. Communications controller 15 is also connected to battery management unit 20.

In the exemplary system of Figure 1, each cell monitoring device 10-1...10-N is configured to monitor one or more battery cells 22-1...22-N. and obtain measurements of physical characteristics associated with one or more cells 22-1...22-N, such as voltage, current, temperature, pressure, strain, force etc. and/or derived measures such as State of Charge (SoC). These measurements (which in some examples, may include derived measures) are then transmitted from each cell monitoring device 10-1...10-N to communications controller 15 via wired harness 12.

Communications controller 15 may be arranged to aggregate all messages from cell monitoring devices 10-1...10-N and then pass them to battery management unit 20, or alternatively communications controller 15 may be configured to pass individual messages directly to battery management unit 20 which then proceeds to process received measurements to determine a current state of the battery system.

Often communications controller 15 will be a separate hardware device from battery management unit 20. Alternatively, communications controller 15 and battery management unit 20 may be integrated into a single hardware device in which communications controller 15 is responsible for co-ordinating receipt of data via wired harness 12 and battery management unit 20 is responsible for analysis and processing of data.

One drawback of the wired battery management system architecture illustrated in Figure 1 is that in such an architecture, communications controller 15 and wired harness 12 are configured to receive measurements from a pre-defined number of cell monitoring devices 10-1...10-N. This makes expansion of the system difficult as addition of additional cell monitoring devices 10-1...10-N will normally require addition of extra circuitry and connectors to communications controller 15 to connect to additional cell monitoring devices as well as modification of wired harness 12.

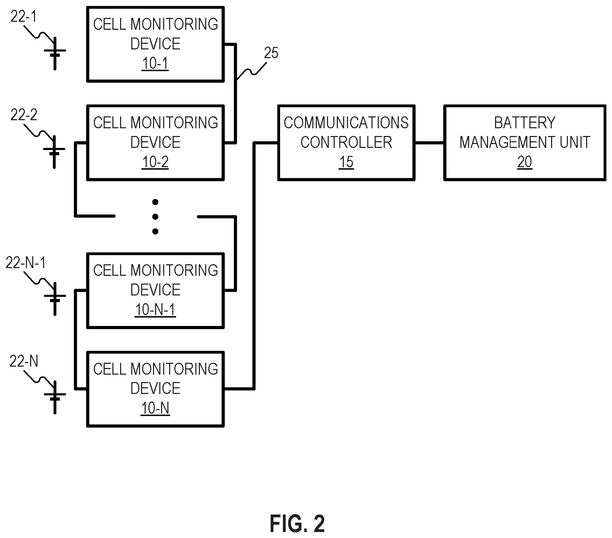

Figure 2 shows an alternative approach to the wired battery management system architecture of Figure 1. In contrast to the wired battery management system architecture in Figure 1 in which wired harness 12 connects cell monitoring devices 10-1...10-N to communications controller 15 in the form of a star network, in the exemplary architecture of Figure 2, cell monitoring devices 10-1...10-N are wired by wiring 25 in the form of a daisy-chain network in which successive cell monitoring devices 10-1...10-N are connected in series.

Operation of the wired battery management system architecture of Figure 2 is very similar to the operation of the star network of Figure 1, except that rather than each cell monitoring device 10-1...10-N communicating directly with communications controller 15, messages are conveyed to and from cell monitoring devices 10-1...10-N by being relayed up and down daisy-chain wiring 25. This means operation of each cell monitoring device 10-1...10-N is no longer identical, since cell monitoring device 10-N with a direct connection to communications controller 15 must relay messages from all other cell monitoring devices 10-1...10-N-1 while cell monitoring device 10-1 at the end of the daisy chain has no message relay demands. The latency on a message (how long it takes to travel from a source cell monitoring device to communications controller 15) varies from cell monitoring device to cell monitoring device and increases as the number of cells/cell monitoring device increases. In some embodiments, daisy-chain wiring 25 can be formed into a loop terminating at communications controller 15 at both ends. In this case, latency can vary between cell monitoring devices 10-1...10-N depending on the direction around the loop that messages travel. This variable latency is a drawback of daisy-chain wired battery networks.

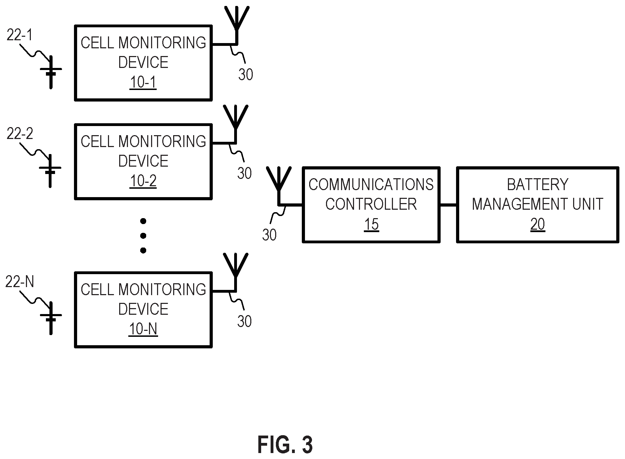

Figure 3 shows a variation of the battery management system architecture of Figure 1, but instead of using wired harness 12, communications are made wirelessly via a radio network. To that end, each cell monitoring device 10-1...10-N has an antenna 30, as does communications controller 15. The radio network may use far field antenna or near-field coupling.

The wireless battery management system architecture of Figure 3 has the advantages of a wired star network (all cell monitoring devices 10-1...10-N are identical, constant latency etc.). Additionally, neither communications controller 15, nor any wired harness 12 needs to be modified as the number of cell monitoring device 10-1...10-N changes.

### Structure of communications controller and cell monitoring devices

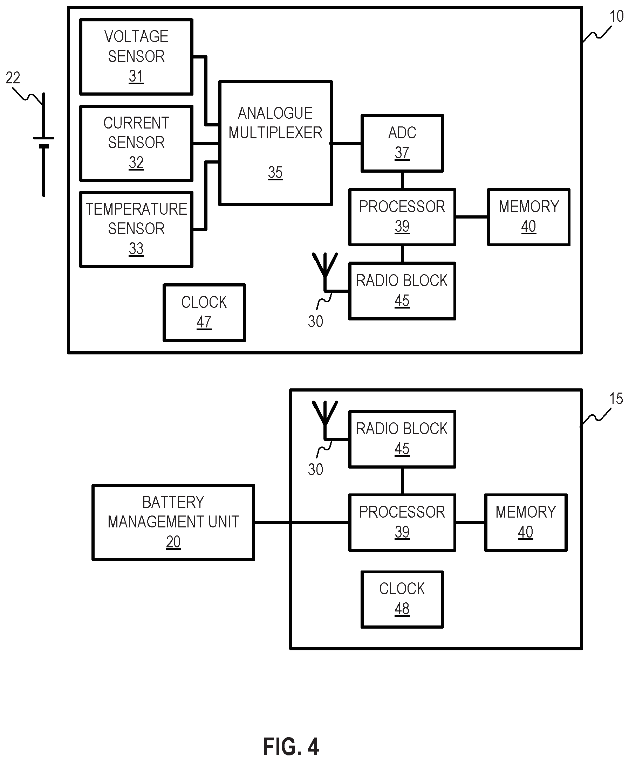

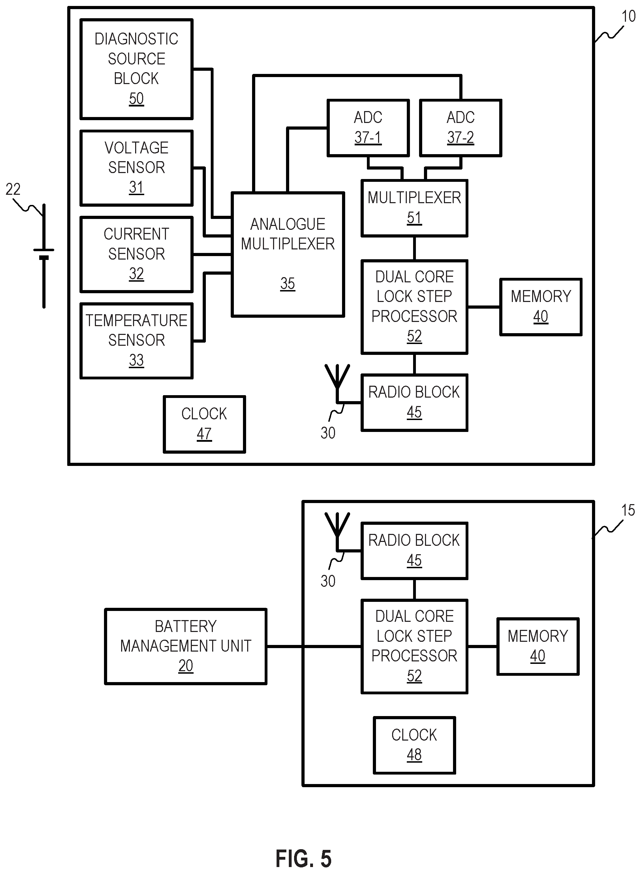

The structure of communications controller 15 and cell monitoring devices 10-1...10-N of the system of Figure 3 will now be described in greater detail with reference to Figures 4 and 5.

Turning first to Figure 4, in an embodiment, cell monitoring device 10 of the battery management system of Figure 3 may comprise one or more sensors 31, 32, 33. In Figure 4, three sensors: voltage sensor 31, current sensor 32 and temperature sensor 33 are shown. It will be appreciated that in other embodiments, more or fewer or different sensors might be included in cell monitoring device 10. For example, these may include pressure, strain, force, sound, light, etc. Such sensors may be located within individual cell modules 10-1...10-N or they may be placed in groups of modules or in a battery system casing.

In this embodiment, sensors 31, 32, 33 are connected via analogue multiplexer 35 to analogue to digital convertor (ADC) 37 which is also connected to processor 39. In alternative embodiments, analogue multiplexer 35 could be omitted and instead multiple ADCs 37 could be provided with each of the sensors being connected to processer 39 directly via its own dedicated ADC 37. It will, however, be appreciated that the provision of analogue multiplexer 35 enables the duplication of ADCs 37 to be avoided.

Processor 39 is also connected to memory 40 which may be non-volatile random-access memory (NVRAM) or read only memory (ROM) which stores a program comprising processing instructions for processing digital signals representing sensor measurements received from ADC 37. Alternatively, memory 40 may comprise static random-access memory (SRAM) enabling a program to be stored and then subsequently modified. Such embodiments may facilitate the creation and debugging of programs for storage in a cell monitoring device 10 during development of a battery management system.

In addition, processor 39 is also connected to antenna 30 via radio block 45. Clock 47 is provided within cell monitoring device 10 to co-ordinate timing of sensor measurements and other processes undertaken by cell monitoring device 10. In some embodiments clock 47 may take the form of an oscillator.

In use, sensors 31, 32, 33 take measurements from one or more battery cells 22 (only one battery cell 22 is shown in Figure 4, but typically in embodiments monitoring device 10 may be arranged to obtain measurements from multiple battery cells e.g. groups of 12 or more). Analogue measurements from sensors 31, 32, 33 are passed via analogue multiplexer 35 to ADC 37 which sends a digitised measurement to processor 39. Processor 39 then runs a program stored in memory 40 that transforms the received digital signal into a measurement value that has physical meaning, such as Volts, Amps, Kelvin etc. and packages the data ready for transmission. In embodiments packaged digitized measurements may be retained within internal registers within processor 39 prior to transmission. Periodically radio block 45 is activated which causes the stored packaged measurements stored internally within registers within processor 39 to be transmitted wirelessly via antenna 30 to communications controller 15.

The structure of communications controller 15 is similar to that of cell monitoring device 10 in that communications controller 15 also comprises antenna 30, radio block 45, processor 39, memory 40, and clock 48. However, rather than storing a program which co-ordinates the capture, packaging and transmission of sensor measurements from sensors 31, 32, 33, memory 40 in communications controller 15 stores a program which causes processor 39 of communications controller 15 to co-ordinate transfer of the measurement data to battery management unit 20. Processor 39 of communications controller 15 may, in some embodiments, detect an error in the transmission, reception and/or packaging of sensor measurements before transferring measurement data to battery management unit 20. Such processing may involve the checking of an error detection or error correction code included in transmissions received via antenna 30. In addition, communications controller 15 also provides a communications path for control messages to be sent from battery management unit 20 via antennas 30 and a wireless communications link to cell monitoring devices 10-1...10-N. Communications controller 15 may, in some embodiments, generate and send control messages to cell monitoring devices 10-1...10-N via antennas 30.

The alternative architecture illustrated in Figure 5 provides a more robust architecture compared to that of Figure 4. By way of example, and with reference to the architecture of Figure 4, a fault in ADC 37 may go undetected. Alternatively, a fault in a software program may go undetected. "Stuck at" faults may occur at numerous locations, where a value which should change is not updated. If an ADC 37 output value fails to be updated, the system may not notice that the value fails to change. Meanwhile, a cell may have gone over voltage, creating a hazard. Processor software may fail to update a value being sent to radio block 45, so communication controller 15 receives what looks like a safe value, but which is actually incorrect.

In view of these issues, in many applications an alternative architecture such as is illustrated in Figure 5, may be used.

Compared with the architecture of Figure 4, in the alternative architecture of Figure 5, diagnostic source block 50 is included in cell monitoring device 10 which is arranged to apply known signals to analogue multiplexer 35. If a known value, or a predicted value based on the known value, is not then subsequently seen by the processor of monitoring device 10 or communications controller 15, then that can be an indicator of something having gone wrong and a fault will have been detected.

Further, the architecture of Figure 5 replaces ADC 37 with multiplexer 51 connected to two ADCs 37 -1, 37-2. It is unlikely (i.e. there is a low likelihood) that both ADCs 37-1, 37-2 will simultaneously display the same fault. Hence outputs from ADCs 37 -1, 37-2 may be compared, and if they are not substantially in agreement (i.e. the obtained ADC conversions substantially correspond) the fault can be flagged. Ordinarily, in such circumstance, if there is a disagreement between the results of ADCs 37-1, 37-2, it will normally only be possible to determine that one of ADCs 37-1, 37-2 is at fault, but not which one. However, in some embodiments it may be possible to identify which of ADCs 37-1, 37-2 is in error in combination with a diagnostics source (e.g. a known value or a predicted value based on the known value from diagnostic source block 50). A further potential benefit of the presence of two ADCs 37-1, 37-2 is that the outputs of ADCs 37-1, 37-2 which are in substantial agreement (i.e. the obtained values do not disagree by more than a threshold amount) may be averaged to obtain an averaged value of a digitized sensor signal. This may increase the accuracy of analogue to digital conversion of a measured analogue signal as it will reduce the impact of noise in the measurement and conversion process. In some embodiments, this may be preferable to merely truncating measured signals from a single ADC.

In addition to replacement of single ADC 37, with a pair of ADCs 37-1, 37-2 and multiplexer 51, in the architecture of Figure 5, processors 39 of monitoring device 10 and communications controller 15 are replaced with dual core lock step processors 52. Dual core lock step processors 52, sometimes called safety processors, are processors containing two (or more) processor cores, where each core runs the same software program, but one core is delayed relative to the other. Other than this delay, the two cores run in lock step. This enables the output of cores to be compared (with the delay accounted for). As the cores run the same program on the same data, results should agree exactly. Hence if one of the software programs is corrupted on one of the cores and results do not agree, a fault can be detected.

Although these modifications to the architecture of Figure 4 increase the ability to confirm that errors have not occurred during the conversion and transmission of sensor measurements from sensors 31, 32, 33 at cell monitoring device 10 to battery management unit 20, reliability of data received by battery management unit 20 can be further enhanced by restricting the processing undertaken by dual core lock step processors 52.

More specifically, the applicants have appreciated that software processing of data within a communications path between acquisition of analogue measurements by sensors 31, 32, 33 at cell monitoring devices 10-1...10-N and receipt of collected data at battery management unit 20 is a significant potential source of error within a battery management system. Hardwired data processing such as that undertaken by multiplexer 35 and ADCs 37-1, 37-2 is inherently deterministic. For example, as described above, it is possible to detect a fault or an error because the outcomes of hardwired data processing are predictable within a tolerance range. However, software processing, particularly where it is dependent upon factors external to a processor is not (e.g., because such external factors can lead to a wide-ranging outcomes, often leading an outcome from a number of possibilities which are, in practice, unpredictable until the processing has actually taken place). Examples of such external factors will include any processing based on interrupts which will alter expected processing by causing a particular process to be halted whilst a secondary process is undertaken. In addition, actions reliant upon non-deterministic external memory access (as opposed to storage of values within registers of a processor) may result in non-deterministic errors as may the use of a stack as stack overflow errors may occur at unexpected times. Conversely, when processing is deterministic and does not involve interrupts and external memory access steps etc. processing can be expected to run to completion within a set period and there would be expected to be comparatively little variation in the time taken to run a program to completion. This would not be the case where a program involves interrupt steps as such interrupts necessarily render the time taken for a program to run to completion uncertain as any interrupts result in the suspension of processing for an unknown period of time and the timing with which such interrupts are triggered will not be known in advance.

Although it may be possible to analyse software to "prove" that errors will not occur, such analysis is difficult, time consuming and expensive. The applicants have appreciated that much of the potential unreliability of software processing in the data path between a set of sensors 31, 32, 33 and battery management unit 20 can be reduced by applying a number of primary principles to the construction of programs to be run by processor 39, 52.

First as a matter of principle the processing of measurements from a set of sensors 31, 32, 33 should be restricted to the conversion of sensor measurements into meaningful digital data (e.g., conversion of sensor measurements into digital code to a measurement value that has physical meaning, such as Volts, Amps, Kelvin etc) and the packaging (including generation and checking of any error detection or error correction codes within data for transmission) of such data so that it can be transmitted to battery management unit 20 for analysis. Other processes, for example non-critical but potentially helpful processing such as the generation of histogram data representing time cells 22-1...22-N stay in a particular state should be performed via a separate processing path using a separate processor which is not responsible for the processing, packaging and transmission of sensor measurement data.

Secondly, programs to be executed as part of this data transmission path should be designed so as to avoid the use of any interrupts, external memory access steps involving storage or access of data within non-deterministic memory, or the use of a stack. This latter principle can be achieved if programs within the data transmission path are arranged to store data within internal registers of processor 39 rather than utilizing external memory storage in the course of processing and transmitting sensor data from sensors 31, 32, 33 to battery management unit 20 and the extent of programs which are to be run by processor 39, 52 are such that they are necessarily run to completion within a timescale which is smaller than the timescale with which sensor measurements are obtained and reported to battery management unit 20.

This latter criterion can be achieved where sensor measurements are sampled and reported to battery management unit 20 in accordance with a predetermined schedule and the processing power and clock speed of any processor 39, 52 within the data transmission path between sensors 31, 32, 33 and the battery management unit 20 is such that any program to be run by such processors 39, 52 within the data path are such that it will run to completion within shorter timescales than the timescales with which data is to be sampled and reported.

Thus, by way of example, where cell measurements are sampled and reported at a frequency of a number of Hertz and processor 39, 52 has a processing speed of the order of a number of mega-hertz, programs to be executed by processor 39, 52 need to be such that they are necessarily run to completion within a number of clock cycles less than the ratio between the sampling frequency and the processing speed of processor 39, 52. Although, this means that the processing power of processor 39, 52 will be under-utilized, this will ensure that each program executed by processor 39, 52 is completed and packaged data is available for transmission whenever it is required. This, together with the absence of the use of interrupts, external memory access or the use of a stack, is such to cause processor 39, 52 to operate as a deterministic state machine and as such will render the reliability of processing by processor 39, 52 comparable to the other hardwired components of cell monitors 10-1...10-N and communications controller 15.

In some examples, processor 39, 52 may be provided in the system (e.g., designed or fabricated) with following functionalities excluded: at least one or all of interrupt, external memory access and/or use of a stack. Alternatively, processor 39, 52 may be provided in the system with the above functionalities but those functionalities are disabled. Yet in other alternative embodiments, processor 39, 52 is provided in the system with the above functionalities but any program to be run thereon is designed so as to avoid using any of those functionalities.

Further it is preferable that the operations performed by processor 39, 52 within the communications path between ADC 37 or ADCs 37-1, 37-2 and battery management unit 20 are such that processing is limited to the conversion of the outputs of the ADCs into data and the packaging of such data inclusive of creation and appending of any error checking or error correction codes without the data representative of the sensor measurements being stored or modified. Preferably, the processing is limited to processing in accordance with a single set of instructions corresponding to this task. This should assist in ensuring that processors 39, 52 operation is identical each time the process is undertaken.

### Timing and synchronisation of data sensor measurements

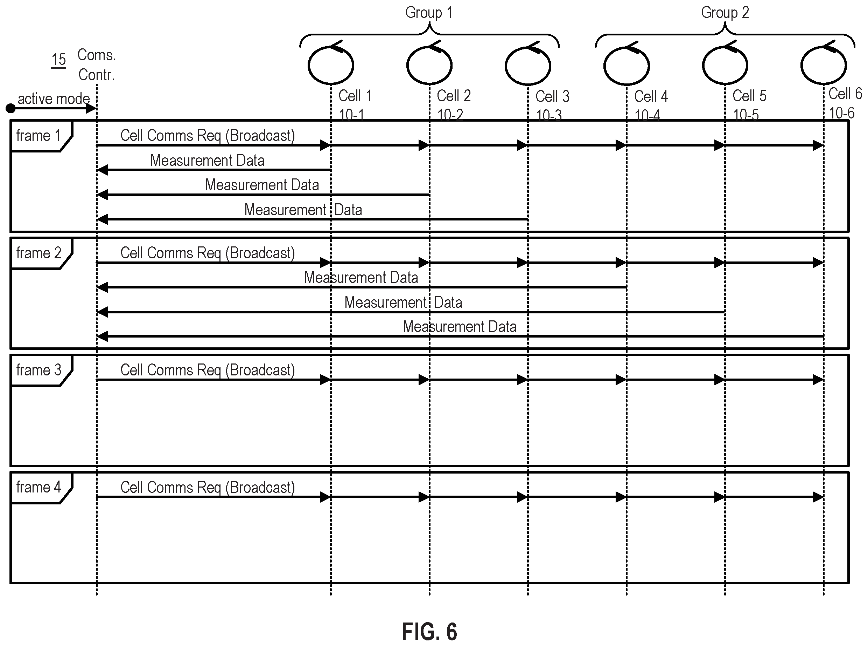

The timing and synchronisation of data relating to sensor measurements and data transmission within a battery management system will now be described in greater detail with reference to Figures 6-11.

Figures 6-11 are a set of schematic illustrations to explain the timing and scheduling of data transmission within a battery management system.

Figure 6 illustrates an exemplary data reporting schedule. In the exemplary reporting schedule, each cell monitoring device 10- 1...10-N (e.g., cell monitoring devices associated with Cell 1, Cell 2, Cell 3, Cell 4, Cell 5, Cell 6, Cell 7, Cell 8 in Figures 6-9) is allocated to a group. In the case of Figure 6 in which 6 cells/cell monitoring devices are depicted, the cells/cell monitoring devices are shown as being divided into a first group - Group 1- corresponding to cells/cell monitoring devices 1-3 - and a second group - Group 2 - comprising cells/cell monitoring devices 4-6. It will be appreciated that the illustration of Figure 6 is exemplary and that in other embodiments, more or fewer cells/cell monitoring devices may be present and that such cells/cell monitoring devices may be grouped into more or fewer groups.

In this example, at an initial time shown in Figure 6 as the beginning of a first frame (frame 1 in Figure 6), communications controller 15 broadcasts a request to all monitoring devices 10- 1...10-N requesting that a first group of cell monitoring devices - group 1 (i.e. devices monitoring cells 1-3) report their obtained measurements to communications controller 15.

In response monitoring devices 10- 1...10-N associated with cells in group 1 (i.e. cells 1-3) proceed to report the most recently obtained and processed measurements from sensors 31, 32, 33. These will correspond to data which has been processed and packaged by processors 39, 52 in monitoring device 10- 1...10-N and stored internally within registers within processors 39, 52. So that the measurements are reported over a period of time rather than simultaneously, each of monitoring device 10- 1...10-N associated with cells 1-3 in group 1 is arranged to report measurements in a predefined time slot within the frame. That is to say each of monitoring device 10- 1...10-N associated with cells 1-3 is configured to transmit data at a different predefined delay after receipt of the message broadcast by communications controller 15.

When the time period for all of the cell monitoring devices 10- 1...10-N monitoring cells in group 1 to report their measurements to communications controller 15 has passed, communications controller 15, then proceeds to request measurements from the next group, in this example group 2 comprising cell monitoring devices 10- 1...10-N monitoring cells 4, 5, and 6. As with the first group, each cell monitoring device 10- 1...10-N associated with cells in group 2 (i.e. cells 4, 5, 6) is preconfigured to report obtained sensor measurements in a particular time slot following receipt of the broadcast request from communications controller 15.

At the end of the frame for reporting measurements from the second group of cells, communications controller 15 then assesses whether data measurements have been received from all cell monitoring devices 10-1...10-N. Communications controller 15 will also check to determine whether any received data was corrupted during transmission. This can be achieved by an error detection code or other similar error checking code being included in messages sent from cell monitoring devices 10-1...10-N and communications controller 15 using the included error checking code to determine if a message has been transmitted and received without the content of a message being altered. If communications controller 15 determines that all expected data has been received and was not corrupted during transmission, in the next two time periods - frames 3 and 4, communications controller 15 transmits a signal to cell monitoring device 10-1...10-N which does not instruct any of cell monitoring devices 10- 1...10-N to transmit any further data.

In some embodiments, rather than instructing cell monitoring devices 10-1...10-N not to transmit any further data, communications controller 15 may instead transmit a request to one or more of cell monitoring devices 10-1...10-N to utilize frames where no additional transmission of sensor measurement data is required to transmit auxiliary data, for example historical data, histogram or provenance data, summary data etc. to communications controller 15. In embodiments in which additional data (i.e. data other than sensor measurement data) is reported to communications controller 15, it is preferable that the collation and transmission of such additional data is handled by a supplementary processor (not shown in Figures 4 and 5), separate to processor 39, 52 as the management and creation of such data is liable to involve the use of external memory access steps.

After the completion of a time period comprising, for example, 4 frames (i.e. two times the number of groups of cells), the process repeats. In some embodiments, reporting of measurements may occur within the same time period as sampling of data.

It is understood that, in other embodiments where a different number of groups of cells are used, the process may repeat after two times that different number. It is also understood that, in yet other embodiments, the process may repeat after an integer number times a number of groups of cells used in the process. In yet other embodiments, the process may repeat after a time period comprising an integer number of frames which include two or more additional frames. This ensures the process provides at least one additional frame for central controller 15 to request a re-transmission of any missing or received data, and for each of cell monitoring devices 10-1...10-N to have at least one further opportunity to perform such a re-transmission, while staying within the framework of a predetermined schedule for communicating measurement data as described above in relation to Figure 6. Furthermore, the process enables each of cell monitoring devices 10-1...10-N to detect that their earlier transmission of measurement data has been received safely from the absence of such re-transmission request. Each cell-monitoring device 10-1...10-N may then delete the last stored measurement data and start working on sampling measurements for the next measurement data to be transmitted to central controller 15.

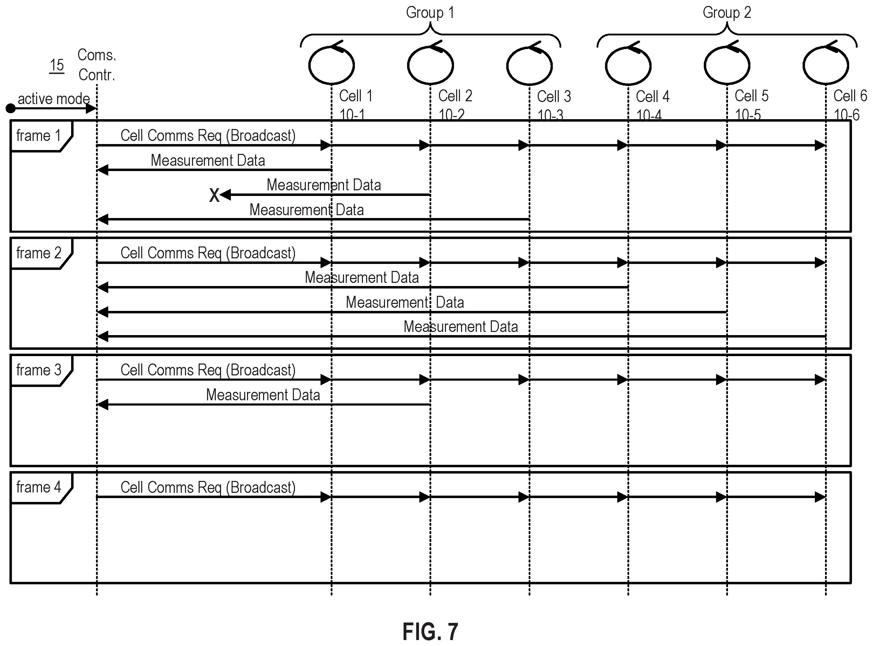

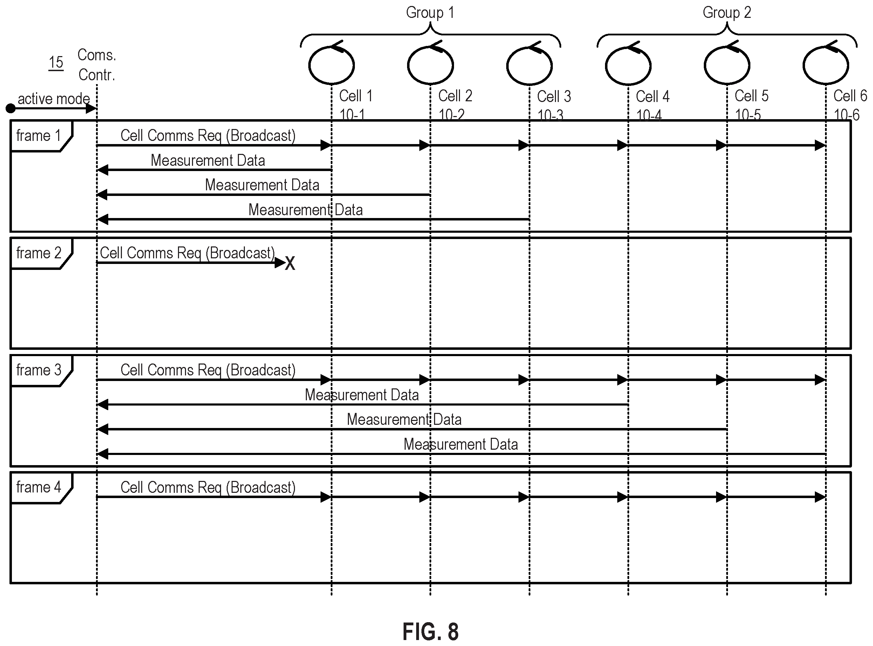

Figures 7 and 8 are illustrations of the process of Figure 6 in which transmission error occurs.

In the case of Figure 7, in the first frame, the response from monitoring device 10 associated with cell 2 is shown as having been lost or corrupted. If this is the case, when communications controller 15 assesses whether responses have been received from all the cells at the end of frame 2, communications controller 15 will determine that the measurement from cell 2 is missing or has been received but was corrupted in the course of transmission and therefore instead of broadcasting a signal which does not instruct any of cell monitoring devices 10- 1...10-N to transmit any further data, at the beginning of frame 3, communications controller 15 broadcasts a signal which requests cell monitoring device 10 associated with cell 2 to retransmit its measurement data. That cell monitoring device 10, then responds by retransmitting previously obtained sensor measurements, in the same time slot (e.g.as depicted in frame 3 in Figure 7), i.e. the same fixed delay relative to receipt of the signal from communications controller 15 as was previously attempted in an earlier frame.

As no other errors were detected to have occurred, as with the example of Figure 7, in the final frame (frame 4), communications controller 15 broadcasts a signal indicating that no further data transmission is required.

Figure 8 is an example of a set of data transmissions in which a data request broadcast by communications controller 15 in frame 2, requesting that cell monitoring devices 10- 1...10-N associated with group 2 report data is lost or corrupted. In such an example at the end of frame 2, when communications controller 15 assesses whether data has been received from all cell monitoring devices 10-1...10-N, communications controller 15 will identify that none of cell monitoring devices 10-1...10-N associated with group 2 have reported any data and hence will proceed to request cell monitoring devices 10- 1...10-N associated with group 2 to retransmit their data in a message broadcast at the beginning of frame 3 to which cell monitoring devices 10- 1...10-N in group 2 respond by sending responses in their allocated time slots within frame 3 in response to the receipt of the data transmission request from communications controller 15.

As will be appreciated, in accordance with the signalling system outlined above, each of cell monitoring devices 10- 1...10-N is requested to transmit data and if data is not received by communications controller 15 within a set time period from the request, retransmission is requested. Further it will be appreciated that the scheduling of responses is achieved by communications controller 15 periodically broadcasting data request signals and cell monitoring devices 10- 1...10-N responding to such data requests, where cell monitoring devices 10- 1...10-N within the same group are arranged to transmit responses within pre-allocated time slots within a frame. In some embodiments, the time slots are variable and can be changed upon receipt of a timing signal from the communications controller 15.

The provision of the possibility of requesting retransmission of data in the event of transmission being interrupted will normally provide reasonable reassurance that data from cell monitoring devices 10- 1...10-N for most reporting cycles will be received and data measurements will only be lost if both a transmission request (or response) and a subsequent retransmission request (or response) are lost or corrupted.

Although in the above, data is described as being requested in the event of a lost or corrupted data transmission, it will be appreciated that in embodiments, either the retransmission of the entirety of a data packet could be requested in the event of loss or corruption or only retransmission of only part of a data packet might be requested, where only part of a data transmission (e.g. data corresponding to one or more measurements from sensors 31, 32, 33) had been corrupted or lost.

As data is required to be reported to communications controller 15 at least once during the time period set for the request and transmission (and possible retransmission) of data, the time period for obtaining and reporting data can be known in advance and hence any programs stored in memories 40 of cell monitoring devices 10-1...10-N and communications controller 15 and the processing power of processors 39, 52 of cell monitoring devices 10-1...10-N and communications controller 15 can be selected so that all processed results are processed to completion before any new data is required to be reported.

In order to identify whether a data packet has been corrupted during transmission, processors 39, 52 of cell monitoring devices 10- 1...10-N may be arranged to append an error detection or an error correction code to data packets and processor 39, 52 of communications controller 15 or alternatively battery management unit 20 may be arranged to process an appended code to determine if a data packet has been corrupted during transmission. The inclusion of an error detection code and the processing of such a code by battery management unit 20 may be preferable as the processing and checking of such a code by battery management unit 20 would enable battery management unit 20 to identify if communications controller 15 had received or corrupted data.

In some embodiments, processors 39, 52 of cell monitoring devices 10-1...10-N may be arranged to include a code within data transmissions identifying the source of the data. Such a code may in some embodiments comprise a code identifying a cell 22 to which a particular data measurement relates. In other embodiments the code may comprise a code corresponding to an identifier for a particular cell monitoring device 10- 1...10-N.

In some embodiments, processors 39, 52 of cell monitoring devices 10-1...10-N may include time stamp data in data to be transmitted to communications controller 15. Such time stamp data may identify a local time associated with a data transmission and/or sensor measurements as identified by clock 47. Further or alternatively processors 39, 52 of cell monitoring devices 10-1...10-N may include a counter value in data transmissions from monitoring devices 10-1...10-N to communications controller 15, where the counter value is incremented each time new data is sent to communications controller 15. The inclusion of cell or cell monitor ID data, time stamp data and/or counter data can be used by communications controller 15 to detect data received that while not corrupt, is received out of order, repetition of data and/or receipt of data from an incorrect source.

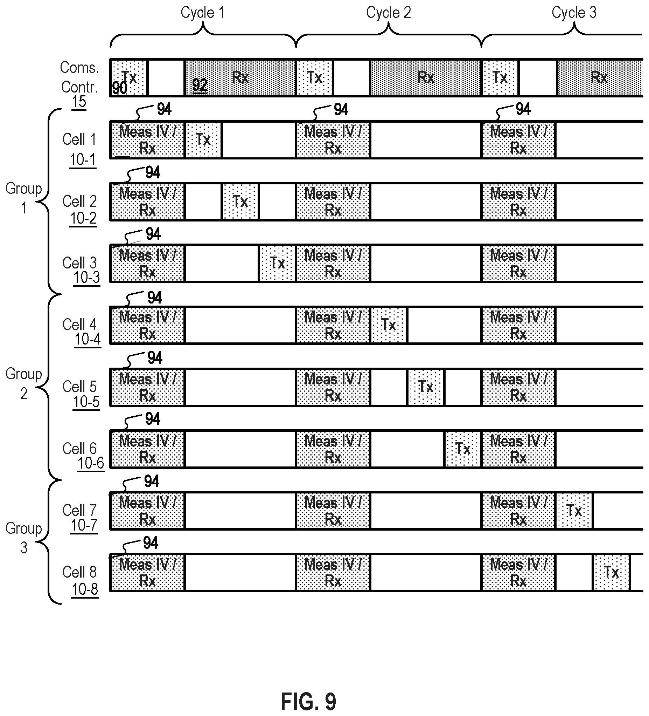

In some embodiments, the scheduling of data transmissions in the manner described above can also be utilized to improve the accuracy with which cell monitoring devices 10- 1...10-N co-ordinate the timing of obtained sensor measurements as will now be explained with reference to Figures 9-11.

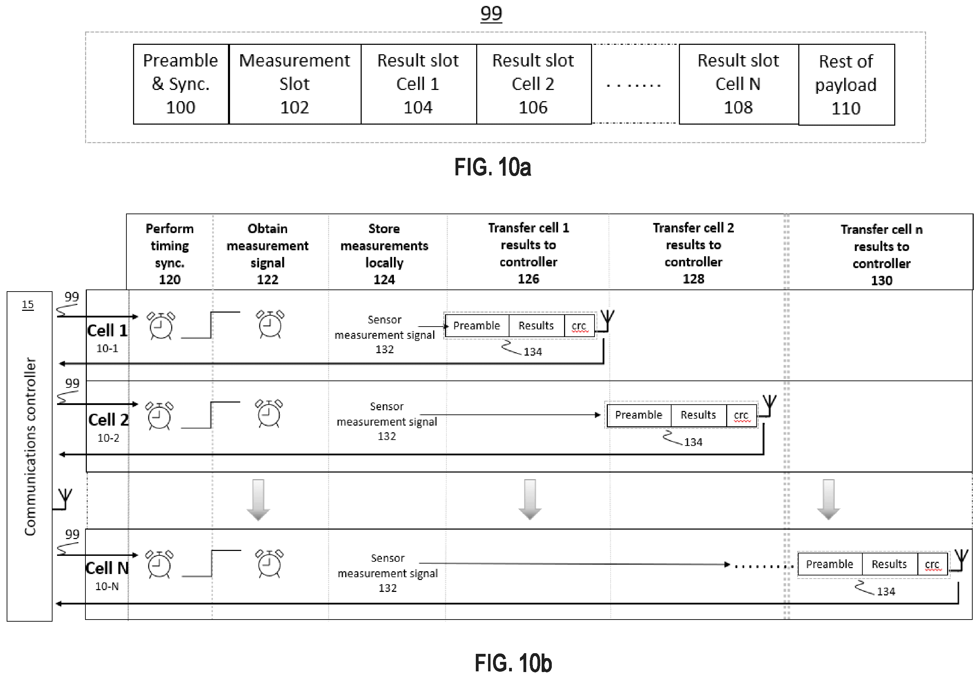

When scheduled in the manner described above, each reporting period from the battery management system comprises a number of cycles each corresponding to a frame as described in Figures 6-8. In each cycle initially communications controller 15 broadcasts data requests to cell monitoring devices 10- 1...10-N and this is then followed by a period of time (Rx 92 in Figure 9) when communications controller 15 receives signals from selected cell monitoring devices 10-1...10-N, where each of individual cell monitoring devices 10- 1...10-N associated with a particular group transmits data a set period after receipt of a data transmission request (time slots Tx 90 for each cell in Figures 9 and 10).

This scheduling of data transmissions and the division of frames into transmission and reception periods is illustrated in Figure 9. More specifically, Figure 9 illustrates such a division in relation to an exemplary system comprising 8 cell monitoring devices 10- 1...10-N, in this example divided into three groups where individual cell monitoring devices 10- 1...10-N associated with cells allocated to a particular group transmit data in response to a data transmission request at particular pre-allocated time slots (Tx 90 in Figures 9 and 10) within a frame (cycle 1, cycle 2, cycle 3 etc. in Figure 9) associated with reporting measurements for a particular group of cells.

In some embodiments, the scheduling of data transmissions may be arranged so that a particular time period is allocated for transmission by one of the devices in direct communication. For example, the scheduling in Figure 9 is such that there is no overlap among transmission time periods during an overall time period allocated for the 3 frames Cycle 1, Cycle 2, and Cycle 3. In other words, only one of central controller 15 and one or more cell monitoring devices 10-1...10-N in Figure 3 is allocated for transmission at a particular time period. In such systems, this may enable the system (or central controller 15 or battery management unit 20) to detect faulty components or errors more reliably, for example by identifying which device is likely to be experiencing a fault or an error based on the received data and the timing of its transmission.

In another embodiment, the scheduling of data transmissions may be managed such that the response period (Rx 92) for the communications controller 15 may result in receiving the measurement data (Meas IV / Rx 94) from all cells 10-1...10-N in a single time frame.

Although the broadcast data transmission requests transmitted by communications controller 15 may have the primary purpose of co-ordinating the timing of reporting sensor measurements (Meas IV / Rx 94) by cell monitoring devices 10- 1...10-N in accordance with a predetermined schedule, the applicants have appreciated that the signals may also be used to improve the co-ordination of timing of sensor measurements across a battery management system.

Shown in Figure 10a is an exemplary diagram depicting the information content of timing signal 99 generated by communications controller 15, and relayed to cell monitoring devices 10-1...10-N to co-ordinate the acquisition of sensor measurements (Meas IV / Rx 94), in accordance with an embodiment. Timing signal 99 may comprise a plurality of different information. For example, timing signal 99 may comprise a preamble and synchronisation slot 100, which comprises a synchronisation marker enabling two or more different cell monitoring devices 10-1...10-N to synchronize their behaviour. For example, this may enable two or more different cell monitoring devices 10-1...10-N to substantially synchronise the acquisition of sensor measurement data. Similarly, it may comprise co-ordinating their internal clocks, which may help to ensure that each cell monitoring device transmits its measurement data at the correct transmission time. In some embodiments, this may comprise two or more different monitoring devices 10-1...10-N synchronizing their internal clocks.

In some embodiments, timing signal 99 may also comprise a specified measurement slot 102. The specified measurement slot 102 effectively establishes a sampling time for at least one sensor 31, 32, 33 associated with each one of the one or more monitoring devices 10-1...10-N to collectively acquire measurement data. In some embodiments, the measurement slot 102 may be defined in terms of a time delay measured from receipt of timing signal 99 by the one or more monitoring devices 10-1...10-N. Timing signal 99 may also comprise information specifying one or more measurement result transmission slots 104, 106, 108, each slot specifying a time when a specific monitoring device 10-1...10-N is to transmit its sensor measurement data via measurement signal 134. In this regard, the measurement result transmission slots 104, 106, 108, may designate a specific time slot when a specific monitoring device is to report measurement data, for its corresponding battery cells 10-1...10-N. Where each cell monitoring device 10 is associated with a different battery cell, then each transmission slot 104, 106, 108 may also be associated with a different battery cell. The monitoring devices 10-1, 10-2, 10-N, and by association the battery cells they are associated with, transmit their measurement data in the sequential order specified by the transmission slots 104, 106, 108 defined in timing signal 99. The transmission slots 104, 106, 108 may interchangeably be referred to as time slots, transmission slots/channels, and result slots.

In accordance with some embodiments, timing signal 99 may also comprise an additional payload slot 110. Payload slot 110 may define a time slot where additional information may be provided, dependent on the context in which the present embodiment is implemented. Accordingly, it allows for customisability. Finally, timing signal 99 may comprise a cyclic redundancy check (CRC), for performing error detection, which may, in some embodiments, be part of the payload slot 110. The CRC enables cell monitoring devices to detect any errors in the received timing signal.

In accordance with some embodiments, measurement slot 102 may define when sensor measurements associated with different battery cells are to be carried out. In some embodiments the measurement slot 102 may effectively instruct each cell to perform sensor measurements at substantially the same time - that is to say, measurement slot 102 may cause cells 10-1...10-N to synchronise their measurements resulting in substantially simultaneous measurements (Meas IV / Rx 94 in FIG. 9) being carried out at all requested cells 10-1...10-N. In some embodiments, timing signal 99 may also instruct which cells 10-1...10-N are to carry out, and more specifically which measurement the one or more sensors associated with cells 10-1...10-N are to carry out. This information may also be comprised in measurement slot 102. In yet further embodiments, timing signal 99 may also selectively instruct specific measurement cells to carry out specific measurements. For example, measurement slot 102 may also identify which one of cell monitoring devices 10-1...10-N are to carry out a measurement, and when to report it in accordance with transmission cell slots 104, 106, 108. Accordingly, the behaviour of all cell monitoring devices 10-1...10-N may be controlled by communications controller 15 via timing signal 99, and embodiments are envisaged in which different cell monitoring devices 10-1...10-N obtain sensor measurement data at different times.

Once the required sensor measurements have been made, in accordance with timing signal 99, the obtained measurement data is packaged into a signal and reported to communications controller 15, at the time slots 104, 106, 108 specified for the given cell 10-1...10-N in timing signal 99.

Figure 10b is a schematic data flow chart illustrating the exchange of data signals between communications controller 15, and a plurality of cell monitoring devices 10-1...10-N. In the illustrated embodiment it is assumed that timing signal 99 transmitted by communications controller 15 comprises measurement slot 102, which instructs all cell monitoring devices 10-1...10-N to obtain a sensor measurement at substantially the same time. Accordingly, in this embodiment the information in timing signal 99 causes cell monitoring devices 10-1...10-N to synchronise their sensor measurements. To achieve this, measurement slot 102 of timing signal 99, defines a shared time at which all cell monitoring devices 10-1...10-N are to obtain sensor measurement data. Initially, to co-ordinate this synchronised measurement, communications controller 15 transmits timing signal 99 to all cell monitoring devices 10-1...10-N. Information comprised in the preamble and synchronization slot 100 of timing signal 99 received by each cell monitoring device 10-1...10-N, is used to synchronize the internal clocks of cell monitoring devices 10-1...10-N, at step 120. In some embodiments this may also comprise synchronising their internal clocks with a clock of communications controller 15. In this way, communications controller 15, and each cell monitoring device 10-1...10-N comprise synchronised clocks, which helps to implement a deterministic communications system, since communications controller 15 knows when it may expect to receive sensor measurement data from each cell monitoring device 10-1...10-N, and the absence of receipt of expected data may be indicative of a fault in the system.

Returning to FIG. 10b, once the internal clocks are synchronized, at step 120, each cell monitoring device 10-1...10-N obtains measurement data from one or more sensors associated with it, at step 122, using information provided in measurement slot 102 of received timing signal 99. As mentioned previously, this may result in sensor measurements being taken at approximately the same time. In accordance with embodiments of the disclosure, it is also envisaged that timing signal 99 may specify what type of measurement data is to be obtained. For example, it may relate to a battery cell voltage, temperature, pressure, or any other physical characteristic of the battery cell. These sensor measurement signals 132 may be stored, at step 124, in memory 40 local to cell monitoring devices 10-1...10-N. Each cell 10-1...10-N may generate a transmission signal 134 comprising the stored sensor measurement signal 132. The transmission signal 134 may further comprise a CRC for error detection. Transmission signal 134 is transmitted to communications controller 15 at the appropriate time slot 104, 106, 108 specified in timing signal 99, at steps 126, 128, 130 depending on which cell 10-1...10-N is transmitting the transmission signal. Upon transmission of the transmission signal 134 to communication controller 15, memory 40 can be cleared, in preparation for subsequent sensor measurement data in a subsequent reporting cycle. Storing the sensor measurements in this manner reduces the chance of memory-related errors, such as stack overflows, or a loss of information.

As shown in FIG. 10b, cell monitoring device 10-1 transmits its transmission signal 134 to communications controller 15, at step 126, associated with the time slot 104, in timing signal 99. Similarly, cell monitoring device 10-2, transmits its transmission signal 134 to communications controller 15, at step 128, associated with time slot 106, in timing signal 99. Cell monitoring device 10-N transmits its transmission signal 134 to communications controller 15, at step 130, associated with time slot 108, in timing signal 99.

In some embodiment, cell monitoring device 10-1...10-N may directly send obtained sensor measurement signal 132 to communications controller 15, without preparing transmission signal 134 comprising additional payload such as CRC. Such embodiments are also envisaged.

It is to be appreciated that, in accordance with disclosed embodiments, a single cell monitoring device 10-1, 10-2, 10-N may be affixed directly to an individual battery cell module, which may comprise an individual battery cell. This arrangement allows for individual battery cells to be monitored upon request by timing signal 99 sent from communications controller 15.

As mentioned previously, in accordance with some embodiments, transmission signal 134 intended for transmission from cell monitoring device 10-1, 10-2, 10-N, to communications controller 15, may comprise different types of information, such as CRC. Additionally, transmission signal 134 may comprise a preamble slot, a measurement data results slot, and a CRC slot. Using the CRC, communications controller 15 may conduct error detection of the measurement data comprised in a received signal, to ensure the correct transmission of measurement results. Once all instructed (as defined by timing signal 99) cell monitoring devices 10-1, 10-2, 10-N have completed transmission of their transmission signal 134, or measurement signal 132, as the case may be, to communications controller 15, the method is complete, and may be repeated upon receipt by cell monitoring devices 10-1, 10-2, 10-N of a new timing signal.

In accordance with some embodiments, timing signal 99 may specify a sensor sampling frequency for each cell 10-1...10-N. The sampling frequency may specify the frequency at which sensor measurements are obtained for subsequent transmission to communications controller 15.

It is to be appreciated that the information content of timing signal 99 may be varied as required. For example, measurement slot 102 may be varied to accommodate newly added cells in the battery system. Similarly, any other information may also be varied to accommodate newly introduced cells. Accordingly, timing signal 99 provides a degree of flexibility in that it can be adapted and changed as required depending on the requirements of the battery management system 20. In practice, this flexibility allows additional battery cell modules 10-1...10-N to be retrofitted to the battery system as required, without compromising the integrity of the system.

When communications controller 15 detects an error in measurement data received by transmission signal 134 a re-transmission request signal may be sent to cells 10-1...10-N requesting that the cell associated with the detected error re-transmit its sensor measurement data, i.e. that it re-transmit a transmission signal 134 comprising sensor measurement data. For example, this might occur where the measurement data received by communications controller 15 has become corrupted. Similarly, if communications controller 15 has not received a transmission signal 134 from a specific cell within its time slot, as defined by timing signal 99, then communications controller 15 may send the re-transmission request.

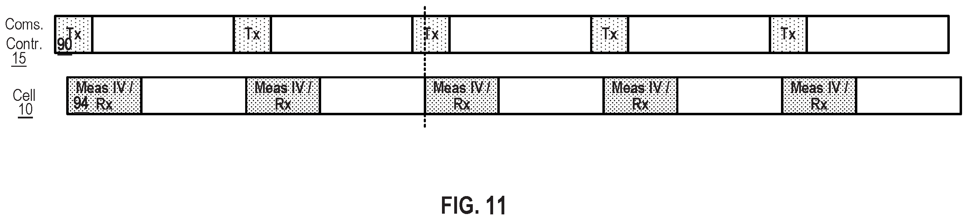

Figure 11 illustrates how cell monitoring devices 10- 1...10-N may use the signals received from communications controller 15 to co-ordinate the acquisition (e.g. through the sampling of measured data) of sensor measurements from sensors 31, 32, 33 of cell monitoring devices 10- 1...10-N. In some embodiments, the sensors 31, 32, 33 of cell monitoring devices 10- 1...10-N are synchronized to acquire measurements simultaneously.

As shown in the upper portion of figure 11, as communications controller 15, is configured to broadcast a data transmission request signal at the beginning of each reporting frame, these signals will be periodically received by cell monitoring devices 10- 1...10-N which can process the signals to identify whether or not they are a signal requiring a response. This results in a deterministic system involving a well co-ordinated timing and reporting between the individual battery cells, their sensors, and the communications controller.

However, additionally, receipt of a particular portion of a signal from communications controller 15 (shown as a dotted line in Figure 11) may also be used to co-ordinate the timing of sensor measurements (e.g., when to acquire or sample output from a particular or a group of sensor(s) as indicated by Meas IV/Rx in Figure 11) by cell monitoring devices 10- 1...10-N.

In some embodiments, a particular time period with a frame is allocated for the acquisition or sampling by all cell monitoring devices 10-1...10-N. For example, cell monitoring devices 10- 1...10-N may be configured to acquire or sample output from the sensor(s) during a time period (e.g. Meas IV/Rx in Figures 9 and 11) when central controller 15 does not expect to receive signals from selected cell monitoring devices 10-1...10-N, where each of individual cell monitoring devices 10- 1...10-N associated with a particular group transmits data a set period after receipt of a data transmission request (e.g., at time slots Tx for each cell in Figures 9 and 11). This way, each cell monitoring device 10-1...10-N does not have to perform the acquisition or sampling while also having to transmit at the same time. In an example, cell monitoring devices 10- 1...10-N may be configured to acquire or sample output from the sensor(s) during a time period allocated for central controller 15 to broadcast data requests to cell monitoring devices 10- 1...10-N. Alternatively, cell monitoring devices 10- 1...10-N may be configured to acquire or sample output from the sensor(s) during a time period that is not allocated for transmission by any of the devices in direct communication (e.g., central controller 15 and any of the cells (Cell 1... Cell 8) so that all cell monitoring devices 10-1...10-N do not have to perform the acquisition or sampling while also having to transmit or receive at the same time. Such approaches may be preferable, as having data acquisition and data transmission and/or reception occur at different times reduces the possibility that acquired data may be adversely influenced by interference arising from the transmission or reception of data.

In some embodiments receipt and identification of a particular portion of a signal from communications controller 15 may directly trigger the acquisition of sensor measurement by cell monitoring device 10. Alternatively, the timing of the acquisition (e.g. the capturing or sampling) of sensor measurement by cell monitoring device 10 may be triggered by clock 47 wherein the acquisition of sensor measurement by cell monitoring device 10 is periodically reset based upon a comparison between a timing indicated by clock 47 and the receipt of a predefined portion of a signal from communications controller 15.

Alternatively, the timing of the acquisition (e.g. sampling) of sensor measurement by cell monitoring device 10 may be triggered after a predefined period from receipt and identification of a particular portion of a signal from central controller 15, the predefined period being determined using clock 47, wherein the acquisition (e.g. sampling) of sensor measurement by cell monitoring device 10 is then, in effect, periodically reset due to the predefined period restarting at each receipt of a predefined portion of a signal from central controller 15.

Such arrangements may reduce timing discrepancies which can arise due to differences between clocks 47 within different cell monitoring devices 10- 1...10-N. In addition, or alternatively to improve the co-ordination of the timing of the measurement of sensor measurements, in some embodiments, the identification of the timing of the receipt of a signal broadcast from communications controller 15, may be used for other purposes. Thus, for example, in systems in which cell monitoring devices 10- 1...10-N trigger or actuate remedial measures within the battery system, the timing of receipt of a signal broadcast from communications controller 15, may be used to facilitate the co-ordination of the actuation of such remedial measures.

Although in the above embodiments, a system has been described in which processor 39, 52 in cell monitoring device 10 processes digitized signals to convert the signals into measurement values that have a physical meaning, it will be appreciated that other alternative arrangements might be used. Thus, for example, in other embodiments, cell monitoring device 10 might be configured to transmit raw digitized signal data to communications controller 15. In such embodiments the communications controller could be configured to store conversion function parameters for converting the raw data into measurement valued that have physical meaning. Alternatively, in other embodiments, cell monitoring device 10 could be configured to transmit conversion function parameters to communications controller 15 along with raw digitized signal data.

Whereas in the preceding embodiments timing signal 99 comprised measurement slot 102, effectively defining when a sensor measurement is to occur, and time slots 104, 106, 108 defining a time slot when each cell monitoring device is to transmit its measurement results, in alternative embodiments the timing signal may not comprise any of that information. Instead, measurement sampling times and transmission time slots may be predefined and stored in memory local to each cell monitoring device. For example, each cell monitoring device may be provided with instructions defining a measurement sampling time. In other words, each cell monitoring device may be provided with instructions that define when one or more sensors associated with the cell obtain sensor measurements. The timing signal sent by communications controller 15 may simply provide the cue for initiating the predefined process. The predefined measurement sampling time may be defined with respect to receipt of the timing signal. For example, the predefined instructions may state that a measurement is to be performed n-seconds after receipt of the timing signal. Similarly, the transmission slots may also be defined in a similar way, e.g. x-seconds after receipt of the timing signal. In other words, both the measurement sampling time and the transmission slots may be defined in terms of a time delay, or a time lapse from receipt by the cell monitoring device of the timing signal form communications controller 15. This reduces the information size of the timing signal. Since the timing signal may still be broadcast to a plurality of different cell monitoring devices, provided each cell monitoring device comprises predefined measurement sampling times, it is still possible for the sensor measurement to be synchronized across the plurality of cell monitoring devices. The content of the transmission signal, which includes the measurement data, that is transmitted to communications controller 15 by a cell monitoring device, may have the same structure as described previously in relation to preceding embodiments. For example, it my comprise a CRC so that communications controller 15 may perform error detection.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, comprising computer-executable instructions, such as program code, executed by computers in networked environments. A computer-readable medium may comprise removable and non-removable storage devices comprising, but not limited to, Read Only Memory (ROM), Random Access Memory (RAM), compact discs (CDs), digital versatile discs (DVD), etc. Generally, program modules may comprise routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

It is to be understood that processors 39, 52 described herein may be implemented using at least one processing unit (or at least one core) and one or more internal registers. It is also to be understood that processors 39, 52 described herein may be implemented using circuitry configured to perform the operations described herein.

Various embodiments are described herein with reference to systems, methods, processes, devices, or computer readable media. It is intended that the disclosure of one is a disclosure of all. For example, it is to be understood that disclosure of a computer readable medium described herein also constitutes a disclosure of methods implemented using the computer readable medium, and systems and devices for implementing those methods, via for example, at least one processor or a circuitry configured to implement those methods. It is to be understood that this form of disclosure is for ease of discussion only, and one or more aspects of one embodiment herein may be combined with one or more aspects of other embodiments herein, within the intended scope of this disclosure.

In the drawings and specification, there have been disclosed example embodiments. However, many variations and modifications can be made to these embodiments. Accordingly, although specific terms are employed, they are used in a generic and descriptive sense only and not for purposes of limitation, the scope of the embodiments being defined by the following claims.

Further features of the disclosure are outlined in the following clauses:
1. A monitoring device operable to report sensor measurement data in a battery system, the monitoring device comprising:
   at least one sensor operable to obtain measurement data of one or more modules of the battery system;
   a receiver operable to receive, from a communications controller, a timing signal defining a transmission time for the measurement data; and
   a transmitter operable to report the obtained measurement data to the communications controller;
   wherein the monitoring device is configured to:
   use the received timing signal to select a sampling time for the at least one sensor to obtain the measurement data of the one or more modules of the battery system; and
   transmit the obtained measurement data to the communications controller at the transmission time defined in the received timing signal.
2. The monitoring device of clause 1, wherein the timing signal defines a plurality of different transmission times, each transmission time being associated with a different one of a plurality of monitoring devices, and wherein the monitoring device is configured to:
   transmit the obtained measurement data to the communications controller at the transmission time associated with the monitoring device.
3. The monitoring device of any preceding clause, wherein the timing signal defines the sampling time, and the at least one sensor is operable to take a measurement and generate the measurement data at the sampling time defined in the received timing signal.
4. The monitoring device of clause 3, wherein the timing signal defines a shared sampling time for a plurality of different monitoring devices, and the at least one sensor is operable to take a measurement and generate measurement data at the sampling time defined for the plurality of different monitoring devices in sync with the plurality of different monitoring devices.
5. The monitoring device of any preceding clause, wherein the monitoring device comprises a clock, and selecting the sampling time of the measurement data of the at least one sensor is done at corresponding time periods as measured by the clock relative to the received timing signal.
6. The monitoring device of any preceding clause, wherein the monitoring device comprises a clock, and the clock is synchronized to the clock of at least one other monitoring device based on the received timing signal.
7. The monitoring device of any preceding clause, wherein the at least one sensor is configured to measure any one or more of: voltage, current, temperature, pressure, strain, or force associated with the one or more modules of the battery system.
8. The monitoring device of any preceding clause, comprising a memory configured to store the obtained measurement data.
9. The monitoring device of clause 8, configured to clear any measurement data stored in the memory after the measurement data is transmitted to the communications controller.
10. The monitoring device of any preceding clause, configured to generate an error detection code enabling an error in the obtained measurement data to be detected; and
   transmit the error detection code to the communications controller.
11. The monitoring device of clause 10, configured to append the error detection code to the measurement data prior to transmitting the appended error detection code and measurement data to the communications controller.
12. The monitoring device of any preceding clause, wherein the monitoring device is affixed to a module of the battery system.
13. The monitoring device of clause 12, wherein the module of the battery system comprises a battery cell, and the monitoring device is affixed to the battery cell.
14. A communications controller operable to receive sensor measurement data from one or more monitoring devices in a battery system, the communications controller comprising:
   at least one processor operable to generate a timing signal;
   a transmitter operable to transmit the timing signal to the one or more monitoring devices, the timing signal defining a transmission time for transmitting sensor measurement data from at least one of the one or more monitoring devices to the communications controller; and
   a receiver operable to receive the sensor measurement data from the one or more monitoring devices; and
   wherein the communications controller is further configured to:
      select a sampling time for at least one of the one or more monitoring devices, the sampling time defining a time at which a sensor of the at least one monitoring device is to obtain sensor measurement data from one or more modules of the battery system; and
      incorporate the sampling time in the timing signal, prior to transmitting the timing signal to the one or more monitoring devices.
15. The communications controller of clause 14, configured to determine if sensor measurement data has been received from the at least one of the one or more monitoring devices within a time interval consistent with the transmission time of the reporting frame associated with the at least one monitoring device defined in the transmitted timing signal; and
   transmitting a re-transmission request to the at least one of the one or more monitoring devices, requesting re-transmission of the sensor measurement data, when the sensor measurement data has not been received within the time interval consistent with the transmission time of the reporting frame.
16. The communications controller of clause 15, wherein the time interval consistent with the transmission time of the reporting frame defines an interval of time following the transmission time of the reporting frame, in which receipt of the sensor measurement data is expected by the communications controller, when the sensor measurement data has been transmitted in accordance with the transmission time defined in the transmission signal.
17. The communications controller of any one of clauses 14 to 16, wherein the one or more monitoring devices comprise one or more sensors configured to obtain measurement data of one or more modules of the battery system, and the sampling time defines a time when measurement data is to be obtained by at least one of the one or more sensors.
18. The communications controller of any one of clauses 14 to 17, wherein the at least one processor is configured to generate a modified timing signal with respect to a previously transmitted timing signal, the modified timing signal defining at least one additional transmission time for transmitting sensor measurement data from at least one newly added monitoring device incorporated into the battery system since the previous timing signal was transmitted.
19. The communications controller of any one of clauses 14 to 18, configured to select a different sampling time for different monitoring devices; and
   incorporate the different sampling times in the timing signal, prior to transmitting the timing signal to the different monitoring devices, the different sampling time enabling different monitoring devices to obtain sensor measurement data at different sampling times.
20. The communications controller of any one of clauses 14 to 18, configured to select a single sampling time for a plurality of monitoring devices, enabling each one of the plurality of monitoring devices to obtain sensor measurement data at the same sampling time.
21. The communications controller of any one of clauses 14 to 20, wherein the timing signal comprises a synchronization marker enabling two or more different monitoring devices to co-ordinate their internal clocks.
22. The communications controller of clause 21, wherein the synchronization marker enables two or more different monitoring devices to synchronize their internal clocks.
23. The communications controller of any one of clauses 14 to 22, wherein the sensor measurement data comprises an error detection code appended to it, and the communications controller is configured to:
   receive the sensor measurement data and appended error detection code; and
   determine if an error is present in the received sensor measurement data, using the error detection code.
24. A battery system comprising a plurality of monitoring devices, each monitoring device being associated with one or more modules of the battery system, wherein each monitoring device comprises:
   at least one sensor operable to obtain measurement data of one or more associated modules of the battery system;
   a receiver operable to receive, from a communications controller, a timing signal defining a transmission time for the measurement data; and
   a transmitter operable to report the obtained measurement data to the communications controller;
   wherein each monitoring device is configured to:
   use the received timing signal to select a shared sampling time for the at least one sensor of each monitoring device to obtain the measurement data of the one or more modules of the battery system associated with the at least one sensor of each monitoring device; and
   transmit the obtained measurement data to the communications controller at the transmission time defined in the received timing signal.
25. The battery system of clause 24, wherein the timing signal defines the shared sampling time, and the at least one sensor of each one of the plurality of monitoring devices obtains the measurement data at substantially the same sampling time.
26. A monitoring device operable to report sensor measurements in a battery system, the monitoring device comprising:
   one or more sensors operable to obtain measurements of one or more modules of a battery system;
   a receiver operable to receive, from a communications controller, a timing signal indicative of the timing of a reporting frame; and
      a transmitter operable to report obtained measurements to the communications controller;
   wherein the monitoring device is configured to:
      transmit, previously obtained measurements to the communications controller at one or more transmission times relative to the timing indicated by a timing signal received from the communications controller; and
      utilize the received timing signal to select sampling times for the measurements obtained by the one or more sensors to be reported to the communications controller in a later reporting cycle.
27. The monitoring device of clause 26, wherein the monitoring device is configured to transmit previously obtained measurements to the communications controller at a predetermined time period relative to the timing of receipt of a message from the communications controller requesting the transmission of obtained measurements to the communications controller.
28. The monitoring device of clause 26 or 27, wherein receipt of the received timing signal triggers the monitoring device to select measurements obtained by the one or more sensors at the time of receipt of the timing signal as measurements to be reported to the communications controller in a subsequent reporting cycle.
29. The monitoring device of clause 26 or 27, wherein the monitoring device comprises a clock, wherein the selection of sampling times for the measurements obtained by the one or more sensors to be reported the communications controller is made at times corresponding time periods as measured by the clock relative to a timing signal received from the communications controller.
30. The monitoring device of clause 29, wherein the one or more transmission times correspond to time periods as measured by the clock relative to a timing signal received from the communications controller.
31. The monitoring device of any one of clauses 26 to 30, wherein the monitoring device is further configured to actuate one or more actuators and is configured to utilize the received timing signal to select actuation times for actuating the one or more actuators.
32. The monitoring device of any one of clauses 26 to 31, wherein the one or more sensors comprise one or more sensors operable to measure any of voltage, current, temperature, pressure, strain, or force associated with of one or more modules of a battery system.
33. A monitoring system for monitoring the status of one or more modules of a battery system comprising:
   one or more monitoring devices in accordance with any preceding clause; and
   a communications controller operable to:
      transmit a timing signal indicative of the timing of a reporting frame to the one or more monitoring devices and
      receive reported measurements of one or more modules of a battery system reported by the one or more monitoring devices.
34. The monitoring system of clause 33, wherein each of the one or more monitoring devices is allocated to a group and is associated with a time slot within reporting frame for reporting measurements to the communications controller;
   wherein the communications controller is operable to transmit a request to the one or more monitoring devices that the monitoring devices of a specified group report measurements obtained by the one or more sensors for a reporting cycle, and the monitoring devices associated with the specified group are responsive to receipt of the request to report obtained measurements in their respective time slots relative to the timing indicated by a timing signal received from the communications controller.
35. The monitoring system of clause 33 or 34, wherein the communications controller is configured to transmit a sequence of requests to the one or more monitoring devices that the monitoring devices of each of the specified groups report measurements obtained by the one or more sensors for a reporting cycle.
36. The monitoring system of any one of clauses 33 to 35, wherein:
   each of the one or more monitoring devices is operable to, prior to transmission, package the obtained measurements and append an error detection code to packaged obtained measurements; and
   the communication controller is operable to use the error detection code to detect an error in the packaged obtained measurements.
37. The monitoring system of clause 36, wherein the error detection code comprises a cyclic redundancy check, and the communication controller is operable to detect a corrupted packet.
38. The monitoring system of clause 36 or 37, wherein the communications controller is operable to transmit a re-transmission request requesting the retransmission of obtained measurements when an error or a corrupted packet is detected.
39. The monitoring system of any one of clauses 33-38, wherein the communications controller is operable to determine, after having requested the reporting of data from all of the one or more monitoring devices, whether measurements have been received from all of the one or more monitoring devices within their respective timeslots and if not to transmit a re-transmission request requesting the retransmission of measurements determined to be missing or determined to have been corrupted.
40. A monitoring device in accordance with any one of clauses 26 to 32, or a monitoring system in accordance with any one of clauses 30 to 36, wherein the communications controller and the monitoring device are operable to transmit and receive obtained measurements via a radio communications link.
41. A battery management system, comprising:
   a battery management unit;
      a communications controller operable to receive and process measurements of one or more battery cells of a battery system received from one or more monitoring devices and provide processed measurements to the battery management unit; and
   wherein the one or more monitoring devices, each comprise:
      one or more sensors operable to obtain measurements of one or more battery cells of a battery system;
      a transmitter operable to transmit obtained measurements to the communications controller; and
      a processor operable to process obtained measurements from the one or more battery cells and cause the obtained measurements to be reported to the communications controller in accordance with a predetermined schedule;
   wherein the communications controller and the processors of the one or more monitoring devices are configured to cause obtained measurements from the one or more battery cells to be reported to the battery management unit in a deterministic manner which is independent of triggering by the processors or the communications controller of any interrupts, external memory access steps or the use of a stack.
42. The battery management system of clause 41, wherein the processors of the one or more monitoring devices are configured to process measurements from the one or more battery cells in accordance with predefined programs, the processing power and clock speed of the processors and frequency with which measurements are reported to the communications controller in accordance with a predetermined schedule being such that processing of measurements in accordance with the predefined programs is completed in advance of measurements being required to be reported in accordance with the predetermined schedule.
43. The battery management system of clause 42, wherein the processors of the one or more monitoring devices are configured to process measurements from the one or more battery cells so that data for reporting the measurements is available for reporting in accordance with the predetermined schedule.
44. The battery management system of any one of clauses 41-43, wherein the processors comprise registers for internal data storage and the data for reporting the obtained measurements for transmission is stored internally within registers of the processors prior to transmission by the transmitter in accordance with the predetermined schedule.
45. The battery management system of any one of clauses 41-44, wherein the processors of the one or more monitoring devices are configured to package the obtained measurements from the one or more battery cells for transmission prior to transmission by the transmitter in accordance with the predetermined schedule.
46. The battery management system of clause 45, wherein the processors of the one or more monitoring devices are further configured to append an error detection code to packaged obtained measurements from the one or more battery cells for transmission by the transmitter.
47. The battery management system of clause 46, wherein the error detection code comprises a cyclic redundancy check.
48. The battery management system of clause 46 or 47, wherein the communications controller is operable to process received measurements to identify if a received measurement has been corrupted during transmission utilizing an appended error detection code.
49. The battery management system of any one of clauses 41-48, wherein the processors of the one or more monitoring devices are operable to include, in the reporting, any of: timestamp data identifying a local time associated with a data transmission and/or the timing of the acquisition of sensor measurements and/or a counter value indicative of the order of the timing of data transmission or the acquisition of sensor measurements in data transmissions to the communications controller.
50. The battery management system of any one of clauses 41-49, wherein the communications controller is operable to determine if measurements of one or more battery cells of a battery system received from one or more monitoring devices are not received within a predefined time period following a data transmission request or have been corrupted during transmission and request retransmission of requested measurements when measurements are identified as not received within a predefined time period or being corrupted during receipt and/or transmission.
51. The battery management system of any one of clauses 41-50, wherein the communications controller and the one or more monitoring devices are operable to transmit and receive measurements of one or more battery cells of a battery system via a radio communications link.
52. The battery management system of clause 51, wherein the communications controller comprises a radio manager operable to receive measurements of one or more battery cells of a battery system from the one or more monitoring devices and provide the processed measurements to the battery management unit of the battery management system.
53. The battery management system of any one of clauses 41-52, wherein the processors of the one or more monitoring devices each comprise multicore processors, wherein multiple cores are configured to run identical programs in lockstep with each other.
54. A monitoring device for use in a battery management system in accordance with any one of clauses 41-53, comprising:
   one or more sensors operable to obtain measurements of one or more battery cells of a battery system;
   a transmitter operable to transmit obtained measurements to a communications controller; and
   a processor operable to process obtained measurements from the one or more battery cells to a battery management unit and cause the obtained measurements to be reported to the communications controller in accordance with a predetermined schedule;
      wherein the processor is configured to cause obtained measurements from the one or more battery cells to be reported to the battery management unit in a deterministic manner which is independent of the processor triggering any interrupts, external memory access steps or the use of a stack.
55. A communications controller for use in a battery management system in accordance with any one of clauses 41 to 53, and/or for use with a monitoring device in accordance with clause 51, comprising:
   a receiver operable to receive measurements of one or more battery cells of a battery system from one or more monitoring devices; and
   a processor operable to process received measurements and provide processed measurements to a battery management unit;
   wherein the processor is configured to cause obtained measurements from the one or more battery cells to be reported to the battery management unit in a deterministic manner which is independent of triggering of any interrupts, external memory access steps or the use of a stack.

## Claims

1. A monitoring device operable to report sensor measurement data for at least one battery cell, the monitoring device comprising:
at least one sensor operable to obtain measurement data of the at least one battery cell;
a receiver operable to receive, from a communications controller, a timing signal defining a transmission time for the measurement data; and
a transmitter operable to report the obtained measurement data to the communications controller,
wherein the monitoring device is configured to:
use the received timing signal to select a sampling time for the at least one sensor to obtain the measurement data of the at least one battery cell; and
transmit the obtained measurement data to the communications controller at the transmission time defined in the received timing signal.

2. The monitoring device of claim 1, wherein the timing signal defines a plurality of different transmission times, each transmission time being associated with a different one of a plurality of monitoring devices, and wherein the monitoring device is configured to:
transmit the obtained measurement data to the communications controller at the transmission time associated with the monitoring device.

3. The monitoring device of any preceding claim, wherein the timing signal defines the sampling time, and the at least one sensor is operable to take a measurement and generate the measurement data at the sampling time defined in the received timing signal; and optionally,
wherein the timing signal defines a shared sampling time for a plurality of different monitoring devices, and the at least one sensor is operable to take a measurement and generate measurement data at the sampling time defined for the plurality of different monitoring devices in sync with the plurality of different monitoring devices.

4. The monitoring device of any preceding claim, wherein the monitoring device comprises a clock, and
selecting the sampling time of the measurement data of the at least one sensor is done at corresponding time periods as measured by the clock relative to the received timing signal; and/or
the clock is synchronized to the clock of at least one other monitoring device based on the received timing signal.

5. The monitoring device of any preceding claim, wherein the at least one sensor is configured to measure any one or more of: voltage, current, temperature, pressure, strain, or force associated with the at least one battery cell.

6. The monitoring device of any preceding claim, comprising a memory configured to store the obtained measurement data; and optionally,
wherein the monitoring device is configured to clear any measurement data stored in the memory after the measurement data is transmitted to the communications controller.

7. The monitoring device of any preceding claim, configured to generate an error detection code enabling an error in the obtained measurement data to be detected; and
transmit the error detection code to the communications controller; and optionally,
wherein the monitoring device is configured to append the error detection code to the measurement data prior to transmitting the appended error detection code and measurement data to the communications controller.

8. The monitoring device of any preceding claim, wherein the monitoring device is affixed to the at least one battery cell; and optionally,
wherein the module of the battery system comprises a battery cell, and the monitoring device is affixed to the battery cell.

9. A communications controller operable to receive sensor measurement data from one or more monitoring devices, the communications controller comprising:
at least one processor operable to generate a timing signal;
a transmitter operable to transmit the timing signal to the one or more monitoring devices, the timing signal defining a transmission time for transmitting sensor measurement data from at least one of the one or more monitoring devices to the communications controller; and
a receiver operable to receive the sensor measurement data from the one or more monitoring devices,
wherein the communications controller is further configured to:
select a sampling time for at least one of the one or more monitoring devices, the sampling time defining a time at which a sensor of the at least one monitoring device is to obtain sensor measurement data from at least one battery cell; and
incorporate the sampling time in the timing signal, prior to transmitting the timing signal to the one or more monitoring devices.

10. The communications controller of claim 9, configured to determine if sensor measurement data has been received from the at least one of the one or more monitoring devices within a time interval consistent with the transmission time of the reporting frame associated with the at least one monitoring device defined in the transmitted timing signal; and
transmitting a re-transmission request to the at least one of the one or more monitoring devices, requesting re-transmission of the sensor measurement data, when the sensor measurement data has not been received within the time interval consistent with the transmission time of the reporting frame; and optionally
wherein the time interval consistent with the transmission time of the reporting frame defines an interval of time following the transmission time of the reporting frame, in which receipt of the sensor measurement data is expected by the communications controller, when the sensor measurement data has been transmitted in accordance with the transmission time defined in the transmission signal.

11. The communications controller of any one of claims 9 or 10, wherein the one or more monitoring devices comprise one or more sensors configured to obtain measurement data of the at least one battery cell, and the sampling time defines a time when measurement data is to be obtained by at least one of the one or more sensors.

12. The communications controller of any one of claims 9 to 11, wherein the at least one processor is configured to generate a modified timing signal with respect to a previously transmitted timing signal, the modified timing signal defining at least one additional transmission time for transmitting sensor measurement data from at least one newly added monitoring device for communication with the communications controller since the previous timing signal was transmitted.

13. The communications controller of any one of claims 9 to 12, configured to select a different sampling time for different monitoring devices; and
incorporate the different sampling times in the timing signal, prior to transmitting the timing signal to the different monitoring devices, the different sampling time enabling different monitoring devices to obtain sensor measurement data at different sampling times; or
the communications controller is configured to select a single sampling time for a plurality of monitoring devices, enabling each one of the plurality of monitoring devices to obtain sensor measurement data at the same sampling time.

14. The communications controller of any one of claims 9 to 13, wherein the timing signal comprises a synchronization marker enabling two or more different monitoring devices to co-ordinate their internal clocks; and optionally,
wherein the synchronization marker enables two or more different monitoring devices to synchronize their internal clocks.

15. The communications controller of any one of claims 9 to 14, wherein the sensor measurement data comprises an error detection code appended to it, and the communications controller is configured to:
receive the sensor measurement data and appended error detection code; and
determine if an error is present in the received sensor measurement data, using the error detection code.
